(19) Europäisches Patentamt / European Patent Office / Office européen des brevets

(11) **EP 3 352 490 B1**

(12) **EUROPEAN PATENT SPECIFICATION**

(45) Date of publication and mention
of the grant of the patent:
**19.08.2020   Bulletin 2020/34**

(51) Int Cl.:
*H04W 8/00* (2009.01)       *H04W 52/02* (2009.01)

(21) Application number: **17199953.5**

(22) Date of filing: **03.11.2017**

(54) **FAST SCAN OF NB-IOT SIGNALS IN NETWORKS**

SCHNELLE ABTASTUNG VON NB-IOT-SIGNALEN IN NETZWERKEN

BALAYAGE RAPIDE DE SIGNAUX NB-IOT DANS DES RÉSEAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.01.2017   EP 17152233**

(43) Date of publication of application:
**25.07.2018   Bulletin 2018/30**

(73) Proprietor: **Commsolid GmbH**
**01099 Dresden (DE)**

(72) Inventors:
• **Nitsche, Gunnar**
**01445 Radebeul (DE)**
• **Schmidt, Michael**
**01324 Dresden (DE)**

(74) Representative: **Lippert Stachow Patentanwälte Rechtsanwälte**
**Partnerschaft mbB**
**Krenkelstraße 3**
**01309 Dresden (DE)**

(56) References cited:
• **INTEL CORPORATION: "On device complexity for NB-IoT", 3GPP DRAFT; R1-156524 - INTEL NB-IOT_UECOMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151116 - 20151120 15 November 2015 (2015-11-15), XP051039878, Retrieved from the Internet: URL:http://www.3gpp.org/ftp/Meetings_3GPP_SYNC/RAN1/Docs/ [retrieved on 2015-11-15]**
• **KEYSIGHT TECHNOLOGIES: "Discussion on NB-IoT Testing frequencies definition", 3GPP DRAFT; R5-165749_DISCUSSION ON NB-IOT TEST FREQUENCIES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG5, no. Gothenburg, Sweden; 20160822 - 20160826 22 August 2016 (2016-08-22), XP051129680, Retrieved from the Internet: URL:http://www.3gpp.org/ftp/Meetings_3GPP_SYNC/RAN5/Docs/ [retrieved on 2016-08-22]**
• **HUAWEI ET AL: "Discussion on cell search for NB-IoT", 3GPP DRAFT; R4-166042, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Gothenburg, Sweden; 20160822 - 20160826 21 August 2016 (2016-08-21), XP051128470, Retrieved from the Internet: URL:http://www.3gpp.org/ftp/Meetings_3GPP_SYNC/RAN4/Docs/ [retrieved on 2016-08-21]**

- HUAWEI ET AL: "NB-PSS evaluation", 3GPP DRAFT; R1-161994, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Sophia-Antipolis, FR; 20160322 - 20160324 22 March 2016 (2016-03-22), XP051081101, Retrieved from the Internet: URL:http://www.3gpp.org/ftp/tsg_ran/WG1_RL 1/TSGR1_AH/LTE_NB-IoT_1603/Docs/ [retrieved on 2016-03-22]

- ERICSSON: "Cell detection times in NB-IoT", 3GPP DRAFT; R4-164150 CELL DETECTION TIMES IN NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Nanjing, P.R. China; 20160523 - 20160527 22 May 2016 (2016-05-22), XP051107022, Retrieved from the Internet: URL:http://www.3gpp.org/ftp/Meetings_3GPP_ SYNC/RAN4/Docs/ [retrieved on 2016-05-22]

**Description**

The invention discloses a method for fast detection scan of NB-IoT signals in networks.

It is important for all wireless standards to be able to quickly detect available networks. Each standard requires different methods adapted to the particular standard. In EP 3043602 A1 a fast method suitable for the 3GPP standard LTE is described. As the new 3GPP standard NB-IoT (narrowband internet of things) is based on completely new synchronization signals, other methods are required for this new standard. A straightforward but slow implementation for NB-IoT is given in the contribution R1-161981 NB-PSS and NB-SSS Design.doc; http://www.3gpp.org/ftp/TSG_RAN/WG1_RL1/TSGR1_AH/LTE_NB-IoT_1603/Docs/R1-161981.zip.

NB-IoT is a complete new LTE based communication standard of 3GPP release 13, targeting cellular based IoT communication with low power consumption, low device costs and extended range of the radio link. For internet of things applications, the low power consumption is very important, in particular for battery powered devices. As reduction of search time of mobile radio communication networks also reduces power consumption, fast scan is even more important for IoT compared to other wireless applications. Furthermore, as NB-IoT shall work in extreme coverage situations, state-of-the-art algorithms are especially slow here. The coverage of a network, e.g. the NB-IoT network, is the geographic area where the station of a network can communicate. Coverage depends on several factors, such as orography and buildings, technology, radio frequency as well as the sensitivity and transmit efficiency of the consumer equipment. Scanning on a single carrier frequency may take several seconds, scanning a whole frequency band may take several minutes.

Similar to the baseline LTE standard, an initial scan procedure is required during PLMN (public land mobile network) selection in order to find the unknown EARFCN (E-UTRA absolute radio frequency channel number). E-UTRA is the air interface of 3rd Generation Partnership Project (3GPP) Long Term Evolution (LTE) upgrade path for mobile networks. With regard to average low power consumption, the active time (also called on-time) of the radio part should be as short as possible. In particular, the low noise amplifier (LNA) and the frequency synthesis of the radio part are the main contributor to the overall power consumption, while being in receive mode. As a matter of fact, it is very beneficial to have a means for a fast frequency scan.

A fast scan of NB-IoT signals over a wide frequency range cannot be simply based on energy detection, since the time domain signal of a LTE frame is subject to gaps of silence. Also, the NB-IoT downlink receive procedure (MIB-Master Information Block, SIB-1 - System Information Block-1) requires a relative long on-time of the radio. It is therefore desirable to start the complete receive procedure only, if there is a high confidence that the detected signal is most likely a NB-IoT signal.

3GPP R1-156524 discloses a method for fast detection scan of NB-IoT signals by applying a sampling rate of 1,92 MHz.

Similar to LTE, dedicated synchronization sequences are specified in 3GPP, called NPSS (Narrowband Primary Synchronization Signal) and NSSS (Narrowband Secondary Synchronization Signal). For a reliable frequency scan it is therefore useful to exploit the specific properties of those synchronization sequences.

The frequency domain sequence used for the narrowband primary synchronization signal (NPSS) is generated from a frequency-domain Zadoff-Chu sequence according to $d_{l+3}(n) = S(l)e^{-j\frac{\pi 5n(n+1)}{11}}$, $n = 0,1,...,10$; $l = 0,1,...,10$ with a cover code

$$\{S(l)\}_{l=0}^{10} = \{+1, +1, +1, +1, -1, -1, +1, +1, +1, -1, +1\} \qquad \text{(Eq. 1)}$$

The NPSS sequence is repeated eleven times, where the sign of each repetition is determined by the cover code. In R1-161981 NB-PSS and NB-SSS Design.doc (see above), a time domain algorithm has been proposed, exploiting the auto-correlation properties of the Zadoff-Chu sequence in conjunction with the cover code. Therein a NPSS signal detection at a low sampling rate $f_s \leq 240$ kHz is proposed. This is appropriate with regard to the bandwidth $BW$ of the NB-IoT signal ($BW \approx 180$ kHz), provided the EARFCN is already known. However, if the EARFCN has not been identified yet, the NPSS signal detection must be serially re-invoked for each EARFCN within the frequency band of interest.

It is therefore the object of the invention to provide a scanning procedure which is reliable and very fast in order to reduce the search time and hence the power consumption.

The object of the invention is solved by a method for fast detection scan of NB-IoT signals according to claim 1.

NB-IoT cells may occur on carrier frequencies on a 100 kHz grid. Normally, state-of-the-art algorithms scan every 100 kHz step using a bandwidth of 200 kHz, thus require e.g. 600 scans on the 3GPP band 20. The 3GPP band 20 stands for the frequency band of the digital dividend, which (is offered in Germany mainly by LTE as a DSL alternative.

A frequency range of 791 - 821 MHz is available for download - ergo 30MHz. For example, the specification of 3GPP band 20 provides that frequency bands of 5, 10, 15 or 20 MHz bandwidth can be used for operation. In order to perform the search for NB-IoT signals faster the inventive method uses a wider bandwidth, e.g. 1.1 MHz, as well as a fast Fourier transformation to transform time domain samples into frequency domain samples and uses special auto-correlations in the frequency domain to detect (e.g. 11) carrier frequency candidates which could carry the NB-IoT signals simultaneously.

The advantages of the inventive method can be seen in the much higher network scan speed, approximately 10 times higher, that also leads to much less power consumption and the trade-off between scan speed and sensitivity can easily be configured at runtime.

This means, applying a higher sampling rate $f_s$ and thus observing the signal at a higher receive bandwidth relative to the signal bandwidth $BW$ gives rise to a parallel search of multiple EARFCN in a single run of NPSS search. A frequency interval

$$-\frac{BW}{2} - M\Delta \le f \le M\Delta + \frac{BW}{2} \, , \, \Delta = 100 \, kHz \qquad (\text{Eq. 2})$$

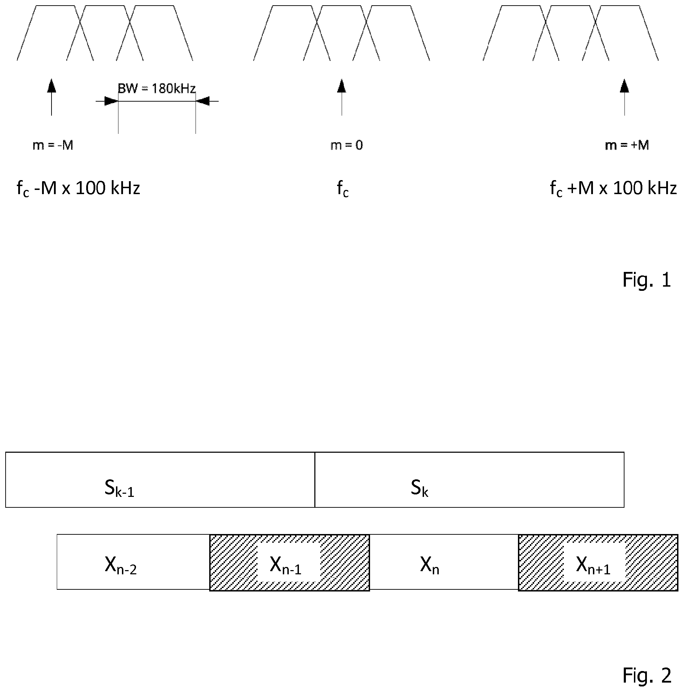

supports a simultaneous scan of EARFCN - $M \le m \le$ -1 and $1 \le m \le M$ in addition to the EARFCN for m = 0 relative to the carrier frequency $f_c$, see figure 1. The integer value m stands for the EARFCN offset.

In principle, this can be accomplished, applying a bank of local discrete time mixers, each with a frequency corresponding to m·100 kHz. A computational more efficient approach is based on the Fast Fourier Transformation, as outlined in the following. Not considered here is the uncertainty of a possible raster offset of $\pm$ 7.5 kHz. As outlined below, this is covered by the robustness of the proposed method with regard to frequency offsets.

In a preferred embodiment, the present method comprises a first stage, at which an average part of a cyclic prefix of a baseband signal is removed. In the LTE standard a so-called cyclic prefix (CP) is used and prepended before each OFDM symbol in order to obtain a time window of orthogonal data transmission without inter-carrier and inter-symbol interference.

Let $\{x \, (k)\}$ be the discrete time baseband signal obtained at some sampling frequency $f_s \ge BW + 2M\Delta$. A first required processing part is to remove the average part of the cyclic prefix from the sequence of incoming data samples x(k).

Assuming a typical LTE sampling rate $f_s = \frac{1}{K} 30.72 \, MHz$ is used, where K is an integer value. For K = 16, a sampling rate of 1920 kHz provides sufficient oversampling for M $\le$ 8. In this case, the average cyclic prefix can be removed by discarding $Q(s = n \bmod 7)$ IQ samples, once the n-th chunk of 128 IQ samples has been captured, where

$$\{Q(s)\}_{s=0}^{6} = \{10,9,9,9,9,9,9\}.$$

Alternatively, a slightly lower sampling rate $f_s = \frac{14}{15 \, K} 30.72 \, MHz$ can be used. In this case, the process of periodically discarding samples as described above can be avoided, since the lowering of the sample rate performs already the cyclic prefix removal.

In a further preferred embodiment, the method comprises a second stage, at which time domain vectors of N IQ samples are collected in time, such that an average time difference of the time domain vectors is equal to one LTE OFDM symbol, whereas N is the length of the vector. An OFDM symbol consists of 12 subcarriers occupying a bandwidth of 180 kHz.

This second stage performs the average cyclic prefix removal.

In a further embodiment, the method comprises a third stage, at which a vector in the frequency domain of each time domain vector is computed, applying a Discrete Fourier Transformation (DFT), forming a DFT vector, respectively.

Without loss of generality, let K = 16. Regardless of the method applied for average cyclic prefix removal, each LTE frame consists of 140 consecutive time domain OFDM symbol vectors $\times_n$ of the form $x_n$ = [x(k + n · 128), x(k+n· 128 + 1),...,x(k + n· 128+127]T$ for n = 0,1,..., 139. By using a Discrete Fourier Transformation of length N = 128 one can obtain a corresponding frequency domain vector $\boldsymbol{X_n = DFT_{128} (x_n)}$ . This is more efficient than applying a bank of local discrete time mixers in conjunction with a FFT.

In another preferred embodiment the third stage is based on a Fast Fourier Transformation (FFT). This is an even more efficient method to achieve the DFT result.

In a further preferred embodiment the method comprises a fourth stage, at which a Hadamard product of a current DFT vector with a conjugate of a previous DFT vector is computed.

This means, the Hadamard product can be expressed as $F_n = X_n \circ X_{n-1}^*$ (Eq. 3), wherein $X_n$ is the current

DFT vector of the n-th OFDM symbol vector and $X_{n-1}^*$ is the conjugate of the previous DFT vector of the conjugate of the previous OFDM symbol vector in time. Due to the good auto-correlation properties of the Zadoff-Chu sequence, the magnitude $|F_n|$ for the symbols $n$ belonging to the NPSS is relative large, provided the sampling is aligned with regard to the boundary of an OFDM symbol.

Furthermore, it is a preferred embodiment that index points $W_m$ of the Hadamard products are added with regard to a frequency content of the received NB-IoT signal of the m-th EARFCN. This provides raw estimates for all 2M+1 EARFCNs. This reduces memory requirements as explained below.

To improve the reliability of the NPSS signal detection the collection of Hadamard products with the added index points $W_m$ are averaged over a time period of multiple LTE frames. The number of LTE frames for averaging can be used to trade-off between scan speed and sensitivity.

In another preferred embodiment, the method comprises a fifth stage, at which a cover code of NPSS contained in the NB-IoT NPSS signal is taken into consideration with regard to the Hadamard product in order to calculate output values. This further improves the reliability of the NPSS signal detection.

In a further preferred embodiment of the method the time domain vector is separated by one half of a LTE OFDM symbol in time, the frequency domain vectors are computed based on the half of the LTE OFDM symbols, the Hadamard product is performed with a corresponding alternate half of a LTE OFDM symbol in time, thus the average time difference of the Hadamard products is again one OFDM symbol period.

If $F_n = X_n \circ X_{n-1}^*$, as stated above is the Hadamard product of the n-th OFDM symbol vector with the conjugate of the previous OFDM symbol vector in time and due to the good auto-correlation properties of the Zadoff-Chu sequence, the magnitude $|F_n|$ for the symbols $n$ belonging to the NPSS is relative large, provided the sampling is aligned with regard to the boundary of an OFDM symbol. However, since the symbol boundary is unknown while performing a NPSS signal detection, the magnitude $|F_n|$ strongly depends on the initial sampling point. This dependency can be relaxed by considering a set of time shifted vectors $x_n^p = [x(k + n \cdot 128 + v_p), x(k + n \cdot 128 + v_p + 1),...,x(k + n \cdot 128 + v_p + 127)]^T$ for $p = 0,1,2,3$ with $v_p = p \cdot 32$ and computing corresponding values $X_n^p$ and $F_n^p$, respectively.

According to the previous preferred embodiment it is an even simpler approach to consider half symbols rather than complete OFDM symbols. Let $x_n = [x(k + n \cdot 64), x(k + n \cdot 64+1), ...,x(k + n \cdot 64+63]T$ be the $n$-th half symbol for $n = 0,1, 00.,279$ belonging to a complete LTE frame. Assuming $X_n = DFT_{64}(x_n)$, similar to Eq. 3, and let

$$F_n = X_n \circ X_{n-2}^* \quad \text{(Eq. 4).}$$

In this case, the dependency of $|F_n|$ with regard to the initial sampling point is considerably relaxed, since at least one portion of a half symbol is always contained in a complete OFDM symbol, regardless of the initial sampling point. This is shown in figure 2. The complete OFDM symbols $S_{k-1}$ and $S_k$ at the radio interface obtain some offset with regard to the random symbol boundary of $X_n$. As can be seen, the half symbols of the pair $(X_{n-2}, X_n)$ are contained within the adjacent OFDM symbols $S_{k-1}$ and $S_k$, whereas the half symbols of $(X_{n-1}, X_{n+1})$ are not.

Note that the k-th element $X_n(k)$ of the vector $X_n$ corresponds to an estimate of the frequency content $\hat{X} = (e^{\left(j\frac{2\pi \cdot k}{64}\right)})$ of the baseband signal. In order to reduce the memory requirements, it is sufficient to store values $A_{n,m} = \sum_{k \in W_m} F_n(k)$, $-M \le m \le M$, $n = 0,1, ...,279$ where $W_m$ is the set of frequency indices belonging to the main spectral part of the NB-IoT signal with regard to the m-th EARFCN.

To improve the reliability of the NPSS signal detection, $A_{n,m}$ can be averaged over multiple LTE frames $v = 1,...,N_F$ according to

$$B_{n,m}(v) = \alpha B_{n,m}(v - 1) + \beta A_{n,m}(v) \quad \text{(Eq. 5)}$$

with $B_{n,m}(0) = 0$ and $0 \le \alpha, \beta \le 1$.

The update of $B_{n,m}$ may be performed in real-time while receiving the I/Q samples. For the $n_x$-th chunk of N samples, the computational complexity of updating $B_{nx,m}$ is approximately given as follows: $N \log_2 N$ applying the Fast Fourier Transform (FFT), N multiplications, $(2M+1)|W_m|$ additions have to be performed. Hence, storage of $B_{n,m}$ is required for $n = 0,1, ...,279$ and $-M \le m \le M$, while performing an in-place update over several frame periods. Storage

of $X_n$ and $X_{n-2}$ is only locally required for step $n = n_x$ up to a depth of 3.

In a further preferred embodiment of the inventive method, 2M+1 peak values are computed with regard to calculated output values according to the cover code of NPSS contained in the NB-IoT NPSS signal and the Hadamard product according to the fifth stage. This has the advantage that the *2M+1* candidates can be examined in parallel.

In another preferred embodiment of the inventive method a single reference value is computed with regard to the output values of the fifth stage. This reference value in conjunction with the peak values provide a decision on the presence of a NB-IoT signal.

Furthermore, in a preferred embodiment of the inventive method a post processing is performed by re-scanning the peak values at a different center frequency, whereas a minimum peak value is taken from the initial scan at a first center frequency and a second scan at the different center frequency. The peak values which had been computed with regard to calculated output values according to the cover code of NPSS contained in the NB-IoT NPSS signal and the Hadamard product according to the fifth stage will be rescanned a second time using a different center frequency. One obtains different peak values from the first scan and the second scan at the different center frequency, respectively. The minimum peak value is taken from these both scans, providing a more reliable estimate of the EARFCN.

According to Eq. 1, the NPSS uses a specific cover code. With regard to Eq. 5 let

$$C_{n,m} = \left| \Sigma_{l=0}^{9} S(l+1)S(l)B_{(2l+1)mod\,280,m}(v = N_F) \right|^2 \geq 0 \qquad (\text{Eq. 6})$$

and let

$$P_{peak}(m) = max_{\{0 \leq n \leq 279\}} C_{n,m} \qquad \{-M \leq m \leq M\}.$$

This means that for each channel value $\{-M \leq m \leq M\}$ a dedicated peak value $P_{peak}(m)$ is computed. Let $P_{ref}$ be a common reference value according to $P_{ref} = \frac{T}{280} \Sigma_{n=0}^{279} C_{n,m_{opt}}$ with $m_{opt}$ taken from $(m_{opt}, n_{opt}) = arg\text{-}max\{_{-M}$ $_{\leq m \leq M,\ 0 \leq n \leq 279\}}$ $C_{n,m}$ and $T$ being a scaling factor. The presence of a NPSS can be considered if $P_{peak}(m) \geq P_{ref}$ (*Eq.* 7) . This reference value performs an automatic calibration with regard to the dynamic range of the baseband signal $\{x(k)\}$. The scaling factor $T$ should be chosen such that the false alarm rate is very low. A conservative value for $T$ with regard to a very low false alarm rate is found by $\frac{P_{peak}(m)}{P_{ref}} \approx \frac{1}{4}$ $\{-M \leq m \leq M\}$ in the presence of a pure Gaussian noise random signal.

Note that the argument of the complex number $B_{n;m}$ is proportional to the carrier frequency offset, see Eq. 4 making the estimation very robust with regard to an unknown carrier frequency offset. A channel raster offset and a possibly large frequency offset due to crystal tolerances of the user equipment (UE) (up to 25 ppm) are covered by the method of this invention.

The computation of $C_{n;m}$ can be performed in an additional post-processing part, once the RF interface has already been turned off. Since all information of $C_{n;m}$ can be obtained from $B_{n;m}$, explicit storage of $C_{n;m}$ is not required in order to compute $P_{peak}(m)$ and $P_{ref}$.

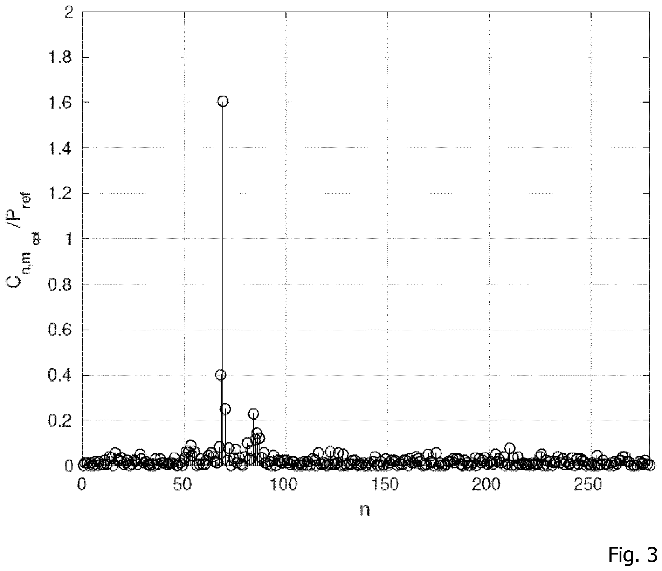

Figure 3 shows a plot of a measurement result of an embodiment of the invention, applying $N_F = 16$ frames for averaging with parameters $\alpha = \beta = 1$. Scanning has been performed at $f_c = 806$ MHz, observing 11 channels (M = 5). The RF interface operated at low input power ($10 \log_{10} SNR < 0$) with 10 ppm offset from the reference clock.

Note that deliberately a set of *2M+1* peak values $P_{peak}(m)$ are computed, and not only $P_{peak}(m = m_{opt})$. This is outlined in the following. Depending on the properties of the radio part, the proposed algorithm may incorrectly indicate additional NB-IoT signals in the vicinity of the correctly detected EARFCN. This may be, for instance, caused due to I/Q mismatch of the receive path of a low IF receiver. In order to mitigate those unwanted false positive detections, it is useful to re-invoke the complete scan but using a different center frequency $f_c + f_o$. The frequency offset $f_o$ should be a multiple of 100 kHz and be chosen such that the found peaks can be re-measured using a single snapshot. Taking the minimum of the peak values with regard to the previous measurement, may retrieve the false peak candidates from the true candidate of the EARFCN.

The invention will be explained in more detail using exemplary embodiments.

The appended drawings show

Fig. 1 A scan of multiple NB-IoT signals simultaneously;

Fig. 2    Half symbol correlation in relation to complete OFDM symbols;

Fig. 3    Correlation result in the presence of a noisy NB-IoT signal at $mo_{pt}$.

Figure 1 shows a frequency interval $-\frac{BW}{2} - M\Delta \leq f \leq M\Delta + \frac{BW}{2}$, $\Delta = $ 100 *kHz* which supports a simultaneous scan of EARFCN - $M \leq m \leq$ -1 and $1 \leq m \leq M$ in addition to the EARFCN for m = 0 relative to the carrier frequency $f_c$.

Applying a higher sampling rate $f_s$ and thus observing the signal at a higher receive bandwidth relative to the signal bandwidth BW gives rise to a parallel search of multiple EARFCNs in a single run of NPSS search.

Let *{x (k)}* be the discrete time baseband signal obtained at some sampling frequency $f_s \geq BW + 2M\Delta$. A first required processing part is to remove the average part of the cyclic prefix from the sequence of incoming data samples x(k). Assuming a typical LTE sampling rate $f_s = \frac{1}{K} 30.72 \, MHz$ is used, where K is an integer value. For K = 16, a sampling rate of 1920 kHz provides sufficient oversampling for M ≤ 8. In this case, the average cyclic prefix can be removed by discarding Q(s = n mod 7) IQ samples, once the n-th chunk of 128 IQ samples has been captured, where $\{Q(s)\}_{s=0}^6 = \{10,9,9,9,9,9,9\}$. Alternatively, a slightly lower sampling rate $f_s = \frac{14}{15 \, K} 30.72 \, MHz$ can be used. In this case, the process of periodically discarding samples as described above can be avoided, since the lowering of the sample rate performs already the cyclic prefix removal.

Without loss of generality, let K = 16. Regardless of the method applied for average cyclic prefix removal, each LTE frame consists of 140 consecutive time domain OFDM symbol vectors $x_n$ of the form $x_n = [x(k + n \cdot 128), x(k + n \cdot 128 + 1), ..., x(k + n \cdot 12B+127]T$ for n = 0,1,...,139. By using a Discrete Fourier Transformation of length N = 128 one can obtain a corresponding frequency domain vector $X_n = DFT_{128}(x_n)$, which is more efficient than applying a bank of local discrete time mixers. Let $F_n = X_n \,^\circ X_{n-1}^*$ (Eq. 3) be the Hadamard product of the n-th OFDM symbol vector $X_n$ with the conjugate of the previous OFDM symbol vector $X_{n-1}^*$ in time. Due to the good auto-correlation properties of the Zadoff-Chu sequence, the magnitude $|F_n|$ for the symbols *n* belonging to the NPSS is relative large, provided the sampling is aligned with regard to the boundary of an OFDM symbol.

However, since the symbol boundary is unknown while performing a NPSS signal detection, the magnitude $|F_n|$ strongly depends on the initial sampling point. This dependency can be relaxed by considering a set of time shifted vectors $x_n^p = [x(k + n \cdot 128 + v_p), x(k + n \cdot 128 + v_p + 1), ..., x(k + n \cdot$ *128+vp+127]T* for p = 0,1,2,3 with $v_p = p \cdot 32$ and computing corresponding values $X_n^p$ and $F_n^p$, respectively.

Referring to figure 2. A simpler approach is to consider half symbols rather than complete OFDM symbols. Let $x_n$**= [*x(k + n · 64), x(k + n · 64+ 1), ...,x(k + n · 64+63)]^T* be the n-th half symbol for *n* = 0,1,...,279 belonging to a complete LTE frame. Let $X_n = DFT_{64}(x_n)$, and similar to Eq. 3, let $F_n$ be defined as

$$F_n = X_n \,^\circ X_{n-2}^* \quad (\text{Eq. 4}).$$

In this case, the dependency of $|F_n|$ with regard to the initial sampling point is considerably relaxed, since at least one portion of a half symbol is always contained in a complete OFDM symbol, regardless of the initial sampling point. This is shown in figure 2. The complete OFDM symbols $S_{k-1}$ and $S_k$ at the radio interface obtain some offset with regard to the random symbol boundary of $X_n$. As can be seen, the half symbols of the pair $(X_{n-2}, X_n)$ are contained within the adjacent OFDM symbols $S_{k-1}$ and $S_k$, whereas the half symbols of $(X_{n-1}, X_{n+1})$ are not.

Note that the k-th element $X_n(k)$ of the vector $X_n$ corresponds to an estimate of the frequency content $\hat{X} = (e^{\left(j\frac{2\pi \cdot k}{64}\right)})$ of the baseband signal. In order to reduce the memory requirements, it is sufficient to store values $A_{n,m} = \Sigma k \in w_m F_n(k)$, -$M \leq m \leq M$, n = 0, 1, ...,279 where $W_m$ is the set of frequency indices belonging to the main spectral part of the NB-IoT signal with regard to the m-th EARFCN.

To improve the reliability of the NPSS signal detection, $A_{n,m}$ can be averaged over multiple LTE frames v = 1,...,$N_F$ according to

$$B_{n,m}(v) = \alpha B_{n,m}(v-1) + \beta A_{n,m}(v) \quad (\text{Eq. } 5)$$

with $B_{n,m}(0) = 0$ and $0 \le \alpha, \beta \le 1$.

The update of $B_{n,m}$ may be performed in real-time while receiving the I/Q samples. For the $n_x$-th chunk of N samples, the computational complexity of updating $B_{n_x,m}$ is approximately given as follows: $N \log_2 N$ applying the Fast Fourier Transform (FFT), N multiplications, $(2M+1)|W_m|$ additions have to be performed. Hence, storage of $B_{n,m}$ is required for $n = 0,1, ...,279$ and $-M \le m \le M$, while performing an in-place update over several frame periods. Storage of $X_n$ and $X_{n-2}$ is only locally required for step $n = n_x$ up to a depth of 3.

According to Eq. 1, the NPSS uses a specific cover code. With regard to Eq. 5 let

$$C_{n,m} = \left|\sum_{l=0}^{9} S(l+1)S(l)B_{(2l+1)\,mod\,280,m}(v = N_F)\right|^2 \ge 0 \quad (\text{Eq. } 6)$$

and let

$$P_{peak}(m) = max_{\{0 \le n \le 279\}} C_{n,m} \quad \{-M \le m \le M\}.$$

This means that for each channel value $\{-M \le m \le M\}$ a dedicated peak value $P_{peak}(m)$ is computed. Let $P_{ref}$ be a common reference value according to $P_{ref} = \frac{T}{280}\sum_{n=0}^{279} C_{n,m_{opt}}$ with $m_{opt}$ taken from $(m_{opt}, n_{opt}) = arg\text{-}max_{\{-M \le m \le M, \ 0 \le n \le 279\}} C_{n,m}$ and $T$ being a scaling factor. The presence of a NPSS can be considered if $P_{peak}(m) \ge P_{ref}$ (Eq. 7) . This reference value performs an automatic calibration with regard to the dynamic range of the baseband signal $\{x(k)\}$. The scaling factor $T$ should be chosen such that the false alarm rate is very low. A conservative value for $T$ with regard to a very low false alarm rate is found by $\frac{P_{peak}(m)}{P_{ref}} \approx \frac{1}{4}$ $\{-M \le m \le M\}$ in the presence of a pure Gaussian noise random signal.

Note that the argument of the complex number $B_{n;m}$ is proportional to the carrier frequency offset, see Eq. 4 making the estimation very robust with regard to an unknown carrier frequency offset. A channel raster offset and a possibly large frequency offset due to crystal tolerances of the user equipment (UE) (up to 25 ppm) are covered by the method of this invention.

The computation of $C_{n;m}$ can be performed in an additional post-processing part, once the RF interface has already been turned off. Since all information of $C_{n;m}$ can be obtained from $B_{n;m}$, explicit storage of $C_{n;m}$ is not required in order to compute $P_{peak}(m)$ and $P_{ref}$.

Figure 3 shows a plot of a measurement result of an embodiment of the invention, applying $N_F = 16$ frames for averaging with parameters $\alpha = \beta = 1$. Scanning has been performed at $f_c = 806$ MHz, observing 11 channels (M = 5). The RF interface operated at low input power ($10 \log_{10} SNR < 0$) with 10 ppm offset from the reference clock.

Note that deliberately a set of $2M + 1$ peak values $P_{peak}(m)$ are computed, and not only $P_{peak}(m = m_{opt})$. This is outlined in the following. Depending on the properties of the radio part, the proposed algorithm may incorrectly indicate additional NB-IoT signals in the vicinity of the correctly detected EARFCN. This may be, for instance, caused due to I/Q mismatch of the receive path of a low IF receiver. In order to mitigate those unwanted false positive detections, it is useful to re-invoke the complete scan but using a different center frequency $f_c + f_o$. The frequency offset $f_o$ should be a multiple of 100 kHz and be chosen such that the found peaks can be re-measured using a single snapshot. Taking the minimum of the peak values with regard to the previous measurement, may retrieve the false peak candidates from the true candidate of the EARFCN.

## Claims

1. Method for fast detection scan of NB-IoT signals in a single run of Narrowband Primary Synchronization Signal NPSS search performed by a UE by applying a higher sampling rate than 240 kHz and observing a received signal at a receive bandwidth relative to a NB-IoT signal bandwidth BW within a frequency interval

$$-\frac{BW}{2} - M\Delta \le f \le M\Delta + \frac{BW}{2} \, , \Delta = 100 \, kHz \text{ to support a simultaneous scan of E-UTRA absolute radio fre-}$$

quency channel number EARFCN $-M \le m \le -1$ and $1 \le m \le M$ in addition to the EARFCN for m = 0 relative to a carrier frequency by the UE, wherein m is a EARFCN offset, wherein a set of 2M+1 NB-IoT signals each having a different EARFCN are observed simultaneously and M is a natural number and 2M+1 indicates a number of observed channels, and by using a wider bandwidth as well as a fast Fourier transformation to transform time domain samples into frequency domain samples and using special auto-correlations in the frequency domain to detect carrier frequency candidates which carry the NB-IoT signals simultaneously.

2.  Method for fast detection scan of NB-IoT signals according to claim 1, wherein the method comprises a first stage, at which an average part of a cyclic prefix of the received NB-IoT baseband signal is removed.

3.  Method for fast detection scan of NB-IoT signals according to claim 1 or 2, wherein the method comprises a second stage, at which time domain vectors of N IQ samples of the receive signal without cyclic prefix are collected in time, whereas N is chosen such that an average time difference of the time domain vectors is equal to one LTE OFDM symbol, whereas N is the length of the vector.

4.  Method for fast detection scan of NB-IoT signals according to one of the claims 1 to 3, wherein the method comprises a third stage, at which a vector in the frequency domain of each time domain vector is computed, applying a Discrete Fourier Transform , DFT forming a DFT vector, respectively.

5.  Method for fast detection scan of NB-IoT signals according to claim 4, wherein the third stage is based on a Fast Fourier Transformation (,FFT.

6.  Method for fast detection scan of NB-IoT signals according to one of the claims 1 to 5, wherein the method comprises a fourth stage, at which a Hadamard product of a current DFT vector with a conjugate of a previous DFT vector is computed.

7.  Method for fast detection scan of NB-IoT signals according to claim 6, wherein index points $W_m$ of the Hadamard products are added with regard to a frequency content of the received NB-IoT signal of a m-th EARFCN.

8.  Method for fast detection scan of NB-IoT signals according to claims 6 or 7, wherein the collection of Hadamard products are averaged over a time period of multiple LTE frames.

9.  Method for fast detection scan of NB-IoT signals according to one of the claims 1 to 8, wherein the method comprises a fifth stage, at which a cover code of NPSS contained in a NB-IoT NPSS signal is taken into consideration with regard to a Hadamard product in order to calculate output values.

10. Method for fast detection scan of NB-IoT signals according to one of the claims 1 to 9, wherein a time domain vector is separated by one half of an LTE OFDM symbol in time, a frequency domain vectors are computed based on the half of the LTE OFDM symbols, a Hadamard product is performed with a corresponding alternate half of an LTE OFDM symbol in time, thus an average time difference of the Hadamard products is again one OFDM symbol period.

11. Method for fast detection scan of NB-IoT signals according to one of the claims 1 to 10, wherein 2M+1 peak values are computed with regard to calculated output values according to a cover code of NPSS contained in a NB-IoT NPSS signal and a Hadamard product.

12. Method for fast detection scan of NB-IoT signals according to claim 9, wherein a single reference value is computed with regard to the output values of the fifth stage.

13. Method for fast detection scan of NB-IoT signals according to claim 11, wherein a post processing is performed by re-scanning the peak values at a different center frequency, whereas a minimum peak value is taken from an initial scan at an initial center frequency and a second scan at the different center frequency.

**Patentansprüche**

1.  Verfahren für die Schnelldetektionsabtastung von NB-IoT-Signalen in einem einzelnen Durchlauf einer Schmalband-Primärsynchronisationssignal-, NPSS-, Suche, die durch eine UE ausgeführt wird, durch Anwenden einer höheren Abtastrate als 240 kHz und Beobachten eines Empfangssignals bei einer Empfangsbandbreite relativ zu einer NB-IoT-Signalbandbreite BW innerhalb eines Frequenzintervalls $-\dfrac{BW}{2} - M\Delta \leq f \leq M\Delta + \dfrac{BW}{2}$, $\Delta = 100$ kHz, um zusätzlich zu der EARFCN für m = 0 relativ zu einer Trägerfrequenz eine gleichzeitige Abtastung einer absoluten E-UTRA-Funkfrequenzkanalnummer EARFCN -M ≤ m ≤ -1 und 1 ≤ m ≤ M durch die UE zu unterstützen, wobei m ein EARFCN-Versatz ist, wobei eine Menge von 2M + 1 NB-IoT-Signalen, die jeweils eine unterschiedliche EARFCN aufweisen, gleichzeitig beobachtet werden und wobei M eine natürliche Zahl ist und 2M + 1 eine Anzahl beobachteter Kanäle angibt, und unter Verwendung einer breiteren Bandbreite sowie einer schnellen Fourier-Transformation zum Transformieren von Zeitbereichsabtastwerten in Frequenzbereichsabtastwerte und unter Verwendung spezieller Autokorrelationen in dem Frequenzbereich, um Trägerfrequenzkandidaten zu detektieren, die die NB-IoT-Signale gleichzeitig übermitteln.

2. Verfahren für die Schnelldetektionsabtastung von NB-IoT-Signalen nach Anspruch 1, wobei das Verfahren eine erste Phase umfasst, in der ein durchschnittlicher Teil eines zyklischen Präfixes des empfangenen NB-IoT-Basisbandsignals entfernt wird.

3. Verfahren für die Schnelldetektionsabtastung von NB-IoT-Signalen nach Anspruch 1 oder 2, wobei das Verfahren eine zweite Phase umfasst, in der Zeitbereichsvektoren von N IQ-Abtastwerten des Empfangssignals ohne zyklisches Präfix in der Zeit gesammelt werden, während N in der Weise gewählt wird, dass eine durchschnittliche Zeitdifferenz der Zeitbereichsvektoren gleich einem LTE-OFDM-Symbol ist, wobei N die Länge des Vektors ist.

4. Verfahren für die Schnelldetektionsabtastung von NB-IoT-Signalen nach einem der Ansprüche 1 bis 3, wobei das Verfahren eine dritte Phase umfasst, in der ein Vektor in dem Frequenzbereich jedes Zeitbereichsvektors berechnet wird bzw. eine diskrete Fourier-Transformation, DFT, die einen DFT-Vektor bildet, angewendet wird.

5. Verfahren für die Schnelldetektionsabtastung von NB-IoT-Signalen nach Anspruch 4, wobei die dritte Phase auf einer schnellen Fourier-Transformation, FFT, beruht.

6. Verfahren für die Schnelldetektionsabtastung von NB-IoT-Signalen nach einem der Ansprüche 1 bis 5, wobei das Verfahren eine vierte Phase umfasst, in der ein Hadamard-Produkt eines aktuellen DFT-Vektors mit einem Konjugierten eines vorhergehenden DFT-Vektors berechnet wird.

7. Verfahren für die Schnelldetektionsabtastung von NB-IoT-Signalen nach Anspruch 6, wobei hinsichtlich eines Frequenzinhalts des empfangenen NB-IoT-Signals einer m-ten EARFCN Indexpunkte $W_m$ der Hadamard-Produkte addiert werden.

8. Verfahren für die Schnelldetektionsabtastung von NB-IoT-Signalen nach den Ansprüchen 6 oder 7, wobei die Sammlung von Hadamard-Produkten über eine Zeitdauer mehrerer LTE-Rahmen gemittelt wird.

9. Verfahren für die Schnelldetektionsabtastung von NB-IoT-Signalen nach einem der Ansprüche 1 bis 8, wobei das Verfahren eine fünfte Phase umfasst, in der in einem NB-IoT-NPSS-Signal enthaltener Deckcode von NPSS hinsichtlich eines Hadamard-Produkts berücksichtigt wird, um Ausgangswerte zu berechnen.

10. Verfahren für die Schnelldetektionsabtastung von NB-IoT-Signalen nach einem der Ansprüche 1 bis 9, wobei ein Zeitbereichsvektor um eine Hälfte eines LTE-OFDM-Symbols in der Zeit getrennt wird, wobei Frequenzbereichsvektoren auf der Grundlage der Hälfte der LTE-OFDM-Symbole berechnet werden, wobei ein Hadamard-Produkt mit einer entsprechenden alternierenden Hälfte des LTE-OFDM-Symbols in der Zeit ausgeführt wird, so dass eine durchschnittliche Zeitdifferenz der Hadamard-Produkte wieder eine OFDM-Symbolperiode ist.

11. Verfahren für die Schnelldetektionsabtastung von NB-IoT-Signalen nach einem der Ansprüche 1 bis 10, wobei hinsichtlich berechneter Ausgangswerte in Übereinstimmung mit einem in einem NB-IoT-NPSS-Signal enthaltenen Deckcode von NPSS und einem Hadamard-Produkt 2M+1 Spitzenwerte berechnet werden.

12. Verfahren für die Schnelldetektionsabtastung von NB-IoT-Signalen nach Anspruch 9, wobei hinsichtlich der Ausgangswerte der fünften Phase ein einzelner Referenzwert berechnet wird.

13. Verfahren für die Schnelldetektionsabtastung von NB-IoT-Signalen nach Anspruch 11, wobei durch erneutes Abtasten der Spitzenwerte mit einer anderen Mittenfrequenz eine Nachverarbeitung ausgeführt wird, wobei aus einer Anfangsabtastung bei einer Anfangsmittenfrequenz und einer zweiten Abtastung mit der anderen Mittenfrequenz ein minimaler Spitzenwert entnommen wird.

**Revendications**

1. Procédé pour le balayage de détection rapide de signaux IoT en une seule exécution d'une recherche de signal de synchronisation primaire à bande étroite NPSS effectuée par un UE par application d'une vitesse d'échantillonnage supérieure à 240 kHz et observation d'un signal reçu à une largeur de bande de réception par rapport à une largeur de bande BW de signal NB-IoT dans un intervalle de fréquences $-\frac{BW}{2} - M\Delta \leq f \leq M\Delta + \frac{BW}{2}$, $\Delta =$ 100 kHz, pour prendre en charge un balayage simultané du numéro de canal radiofréquence absolu E-UTRA, EARFCN, $-M \leq m \leq -1$ et $1 \leq m \leq M$ en plus du EARFCN correspondant à m = 0 par rapport à une fréquence de porteuse, par l'UE, m étant un décalage EARFCN, un ensemble de 2M+1 signaux NB-IoT ayant chacun un EARFCN différent étant observé simultanément, M étant un entier naturel et 2M+1 indiquant un nombre de canaux observés, et par utilisation d'une largeur de bande supérieure ainsi que d'un transformée de Fourier rapide pour transformer des échantillons de domaine temporel en échantillons de domaine fréquentiel et utilisation d'auto-corrélations particulières dans le domaine fréquentiel pour détecter des fréquences de porteuse candidates qui transportent les signaux NB-IoT simultanément.

2. Procédé pour le balayage de détection rapide de signaux IoT selon la revendication 1, le procédé comprenant une première phase, au cours de laquelle une partie moyenne d'un préfixe cyclique du signal de largeur de bande NB-IoT reçu est éliminée.

3. Procédé pour le balayage de détection rapide de signaux IoT selon la revendication 1 ou 2, le procédé comprenant une deuxième phase, au cours de laquelle des vecteurs de domaine temporel de N échantillons IQ du signal de réception sans préfixe cyclique sont collectés dans le temps, N étant choisi de telle façon qu'une différence de temps moyenne des vecteurs de domaine temporel soit égale à un symbole LTE OFDM, où N est la longueur du vecteur.

4. Procédé pour le balayage de détection rapide de signaux IoT selon l'une des revendications 1 à 3, le procédé comprenant une troisième phase, au cours de laquelle un vecteur du domaine fréquentiel de chaque vecteur de domaine temporel est calculé, par application d'une transformée de Fourier discrète, DFT, pour former un vecteur DFT, respectivement.

5. Procédé pour le balayage de détection rapide de signaux IoT selon la revendication 4, dans lequel la troisième phase est basée sur une transformée de Fourier rapide, FFT.

6. Procédé pour le balayage de détection rapide de signaux IoT selon l'une des revendications 1 à 5, le procédé comprenant une quatrième phase, au cours de laquelle on calcule un produit d'Hadamard d'un vecteur DFT courant et d'une conjuguée d'un vecteur DFT précédent.

7. Procédé pour le balayage de détection rapide de signaux IoT selon la revendication 6, dans lequel des points d'index $W_m$ des produits d'Hadamard sont ajoutés par rapport à un contenu fréquentiel du signal NB-IoT reçu d'un m-ième EARFCN.

8. Procédé pour le balayage de détection rapide de signaux IoT selon la revendication 6 ou 7, dans lequel la collecte des produits d'Hadamard est moyennée sur une période de temps correspondant à de multiples trames LTE.

9. Procédé pour le balayage de détection rapide de signaux IoT selon l'une des revendications 1 à 8, le procédé comprenant une cinquième phase, au cours de laquelle un code de couverture des NPSS contenus dans un signal NB-IoT NPSS est pris en considération par rapport à un produit d'Hadamard en vue de calculer des valeurs de sortie.

10. Procédé pour le balayage de détection rapide de signaux IoT selon l'une des revendications 1 à 9, dans lequel un vecteur de domaine temporel est séparé d'une moitié d'un symbole LTE OFDM dans le temps, des vecteurs de domaine fréquentiel sont calculés d'après la moitié des symboles LTE OFDM, un produit d'Hadamard est effectué avec une moitié alternée d'un symbole LTE OFDM dans le temps, de sorte qu'une différence de temps moyenne des produits d'Hadamard est à nouveau une période de symbole OFDM.

11. Procédé pour le balayage de détection rapide de signaux IoT selon l'une des revendications 1 à 10, dans lequel 2M+1 valeurs de crête sont calculées par rapport à des valeurs de sortie calculées selon un code de couverture des NPSS contenus dans un signal NB-IoT NPSS et un produit d'Hadamard.

12. Procédé pour le balayage de détection rapide de signaux IoT selon la revendication 9, dans lequel une valeur de référence individuelle est calculée par rapport aux valeurs de sortie de la cinquième phase.

13. Procédé pour le balayage de détection rapide de signaux IoT selon la revendication 11, dans lequel un post-traitement est effectué par un nouveau balayage des valeurs de crête à une fréquence centrale différente, tandis qu'une valeur de crête minimale est tirée d'un balayage initial à une fréquence centrale initiale et d'un deuxième balayage à la fréquence centrale différente.

$f_c$ -M x 100 kHz

$f_c$

$f_c$ +M x 100 kHz

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3043602 A1